# FASCICULE DE BREVET EUROPEEN

(11) **EP 3 506 527 B1**
(45) Date de publication et mention de la délivrance du brevet: **09.02.2022**
(21) Numéro de dépôt: 18215904.6
(22) Date de dépôt: 26.12.2018
(51) Int. Cl.: H04B 7/185

(54) **PROCÉDÉ DE GESTION D'UN RÉSEAU DE COMMUNICATION ET RÉSEAU DE COMMUNICATION ASSOCIÉ**
STEUERUNGSVERFAHREN EINES KOMMUNIKATIONSNETZES, UND ENTSPRECHENDES KOMMUNIKATIONSNETZ
METHOD FOR MANAGING A COMMUNICATION NETWORK AND ASSOCIATED COMMUNICATION NETWORK

(30) Priorité: 26.12.2017 FR 1701364
(43) Date de publication de la demande: 03.07.2019
(73) Titulaire: Thales, 92400 Courbevoie (FR)
(72) Inventeur: SOULIE, Antoine, 92622 GENNEVILLIERS CEDEX (FR); DELATTRE, Michel, 92622 GENNEVILLIERS CEDEX (FR); CHEVALLIER, Michel, 92622 GENNEVILLIERS CEDEX (FR)
(74) Mandataire: Lavoix

(56) Documents cités:
- WO-A1-97/20362
- US-A- 5 913 164
- "Digital Video Broadcasting (DVB); Second Generation DVB Interactive Satellite System (DVB-RCS2); Part 4: Guidelines for Implementation and Use of EN 301 545-2", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.1.1, 1 avril 2014 (2014-04-01), XP014180498,

## Description

La présente invention concerne un procédé de gestion d'un réseau de communication. La présente invention concerne également un réseau de communication.

Dans le domaine militaire, lors d'un déploiement de véhicules, les véhicules communiquent par l'intermédiaire de transmissions radiofréquences, l'ensemble des véhicules formant un réseau.

Toutefois, les impératifs de mission combinés à la nature du terrain (notamment présence de relief) peut aboutir à ce que certains véhicules soit isolés des autres du point de vue des communications radiofréquences (hors de portée). Cela pose un problème si, lorsque ces véhicules sont hors de portée, un changement de configuration de l'ensemble du réseau a eu lieu puisque les véhicules ne peuvent plus être réintégrés dans le réseau même lorsque ces véhicules reviennent dans la portée du réseau. Les véhicules sont donc non seulement isolés pour le reste de la mission mais risquent de plus de générer des interférences vers les véhicules du même réseau, lesquels auraient été en portée radio lors de la demande de reconfiguration. Ces interférences sont de nature à compromettre le bon déroulement de la mission.

Pour éviter ce problème, une approche consiste à ne pas reconfigurer le réseau lors d'une mission.

Une telle approche rend la mission moins adaptable en fonction d'imprévus.

Du document US 5 913 164 A, il est également connu un système de conversion utilisé dans un système de facturation pour un système satellitaire mobile.

Aussi, l'article de l'European Telecommunications Standards Institute (ETSI) intitulé « Digital Video Broadcasting (DVB) ; Second Generation DVB Interactive Satellite System (DVB-RCS2) ; Part 4 : Guidelines for Implementation and Use of EN 301 545-2 » décrit, au chapitre 10.4.3.3, des techniques d'atténuation des interférences et des évanouissements.

Il est aussi connu de modifier un système AIS pour le terme anglais « Automatic Identification System » signifiant littéralement « système d'identification automatique ». Le système AIS est un système radio maritime de positionnement et d'identification des navires, des stations à terre, de bouées réelles et virtuelles de séparation du trafic maritime et des avions de secours en mission de recherche et sauvetage. La modification du système AIS consiste en une autorégulation de l'accès à une ressource en gérant la contention via une séquence d'écoute et répétition préalable.

Néanmoins, un tel système AIS permet une scission et une fusion de sous-réseaux mais ne permet pas de fournir un service à bande passante garantie de type phonie ou vidéo, il reste uniquement applicable à un service d'identification peu contraint en latence et bas débit.

Il existe donc un besoin pour un procédé de gestion d'un réseau mobile et maillé de communication qui soit plus flexible et aisément adaptable dynamiquement, susceptible de scinder en sous-réseaux en fonction des contraintes d'élongation, et dont les sous-réseaux sont susceptibles de refusionner dès lors que la connexité radio entre sous-réseaux est rétablie.

Pour cela, la présente description porte sur un procédé de gestion selon la revendication 1.

Suivant des modes de réalisation particuliers, le procédé est selon l'une quelconque des revendications 2 à 9.

La présente description se rapporte également à un réseau de communication selon la revendication 10.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une représentation schématique d'un système de communication comprenant une pluralité nœuds, et
- figure 2, une représentation schématique détaillée du système de communication de la figure 1.

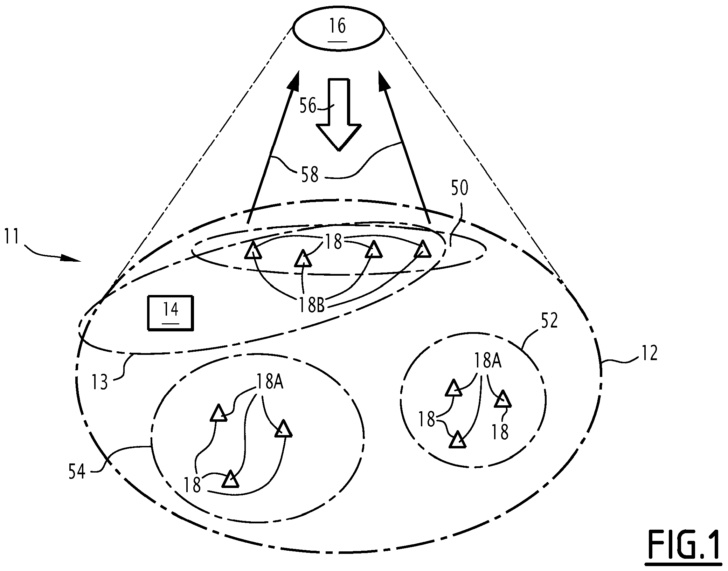

Un système de communication 11 est illustré schématiquement sur la figure 1.

Le système 11 comprend un réseau de communication 12 et un réseau de communication 13.

Le réseau de communication 12 comprend un ensemble de nœuds 18 comprenant des nœuds de réception 18A et des nœuds satellitaires 18B. Les nœuds 18B sont à la fois présents sur le réseau 12 et le réseau 13.

Le réseau 12 est un réseau radiofréquence, c'est-à-dire un réseau 12 dont les communications entre les nœuds 18A ou 18B sont des communications radiofréquence.

Selon l'exemple décrit, le réseau 12 est un réseau UHF. Un réseau UHF est un réseau utilisant des ondes ultra hautes fréquences, c'est-à-dire des ondes correspondant à une bande du spectre radioélectrique comprise entre 300 Mégahertz (MHz) et 3 000 MHz.

En variante, le réseau 12 est un réseau VHF. Un réseau VHF est un réseau utilisant des ondes très hautes fréquences, c'est-à-dire des ondes correspondant à une bande du spectre radioélectrique comprise entre 30 MHz et 300 MHz.

Dans le cas général, le réseau 12 est un réseau interconnectant des transmissions VHF et des transmissions UHF.

Le réseau 12 est caractérisé par au moins une configuration déterminant le fonctionnement du réseau 12.

Le fonctionnement du réseau 12 détermine les liaisons radio possibles entre les différents nœuds 18 ainsi que la nature des liaisons radio possibles.

La nature des liaisons est, par exemple, un numéro de canal de transmission fixé, un créneau temporel de transmission fixé, une fréquence porteuse fixée, une fréquence de transmission fixée ou un largueur de bande de fréquences fixé.

En particulier, le fonctionnement du réseau 12 détermine des sous-groupes de nœuds 18 et leurs modes de communication via une liaison radio.

Le réseau 13 comprend à la fois les nœuds 18B et une station centrale 14. Le réseau 13 est un réseau satellitaire, c'est-à-dire que les nœuds 18B sont aptes à communiquer par transmission satellitaire vers la station centrale 14.

Selon l'exemple représenté, la station centrale 14 est fixe.

Cela signifie que la station centrale 14 présente une position géographique ne variant pas au cours du temps.

La station centrale 14 comporte des éléments de communication pour assurer des communications satellitaires avec les nœuds satellitaires 18B, lesquels sont donc à la fois présents dans le réseau 13 satellitaire et dans le réseau de communication 12 radio.

Un satellite 16 est, en outre, illustré schématiquement sur la figure 1.

Le satellite 16 comprend, non représenté, un récepteur et un émetteur de signaux satellitaires.

Par « signaux satellitaires», il est entendu des signaux radioélectriques reçus par le satellite 16 ou émis par le satellite 16.

Le satellite 16 est, par exemple, un satellite géostationnaire ou une constellation de satellites dans une orbite terrestre basse.

Le satellite 16 est configuré pour recevoir des signaux satellitaires d'une zone de communication satellitaire 19 et diffuser les signaux satellitaires dans la zone de communication satellitaire 19.

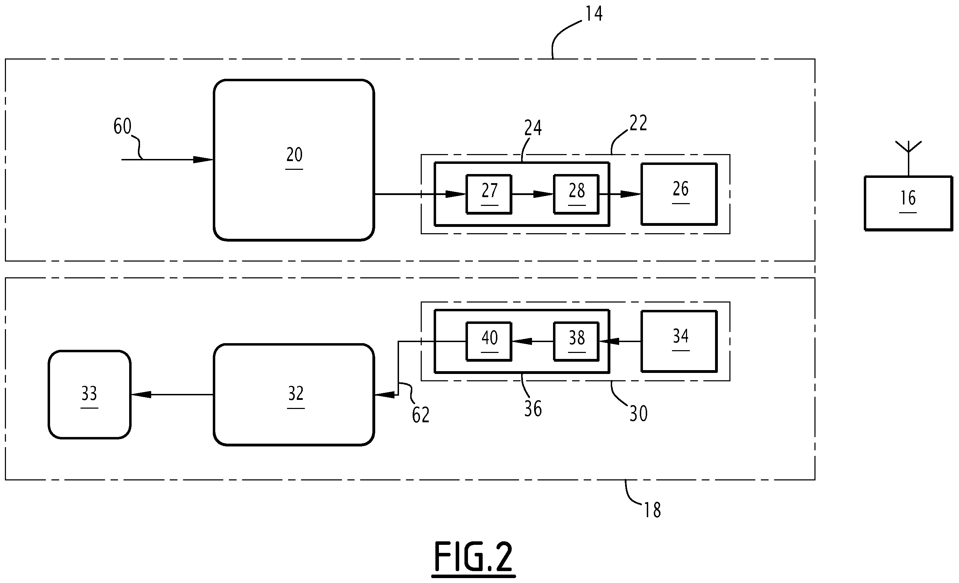

Comme visible sur la figure 2, la station centrale 14 comprend, en outre, un contrôleur central 20 et une chaîne d'émission/réception centrale 22.

Le contrôleur central 20 est un ordinateur.

Plus généralement, le contrôleur central 20 est un calculateur électronique propre à manipuler et/ou transformer des données représentées comme des quantités électroniques ou physiques dans des registres du contrôleur central 20 et/ou des mémoires en d'autres données similaires correspondant à des données physiques dans des mémoires ou des registres.

Le contrôleur central 20 est propre à contrôler l'ensemble des éléments faisant partie de la station centrale 14.

En particulier, le contrôleur central 20 est propre à déterminer une configuration du réseau 12 en fonction du ou des besoins de reconfiguration du réseau 12 remontés par les nœuds satellitaires 18B.

Par « besoin de reconfiguration du réseau de communication », il est entendu une exigence de service à fournir pour le réseau 12, et notamment pour certains nœuds 18.

A titre d'illustration, le besoin de reconfiguration du réseau 12 est fonction d'une quantité de données à transmettre entre au moins deux nœuds 18, de la distance entre deux nœuds 18 ou du nombre de nœuds 18 communiquant entre eux.

La quantité de données à transmettre dépend notamment du type de données à transmettre. Par exemple, une vidéo à transmettre requiert plus de données qu'un signal vocal.

La distance entre deux nœuds 18 détermine la puissance du signal à émettre pour que les deux nœuds 18 puissent communiquer entre eux.

Le nombre de nœuds 18 communiquant entre eux correspond à la répartition des nœuds en sous-groupes.

Lorsque la configuration déterminée est distincte de la configuration actuelle du réseau 12, le contrôleur central 20 est propre à demander une reconfiguration du réseau 12. Par « reconfiguration », il est entendu une modification de la configuration du réseau 12.

La configuration comporte, par exemple, une ou plusieurs des commandes, tel qu'une modification de la répartition en sous-groupe de l'ensemble des nœuds 18 et/ou une modification d'au moins un canal de communication alloué pour une communication entre les nœuds 18 du réseau 12.

Le contrôleur central 20 est relié à la chaîne d'émission/réception centrale 22.

La chaîne d'émission/réception centrale 22 comporte un convertisseur central 24 et une antenne centrale 26.

Le convertisseur central 24 est propre à convertir la demande de reconfiguration provenant du contrôleur central 20 en un message de reconfiguration à transmettre aux nœuds 18.

Le convertisseur central 24 comporte un module central de conformation 27 et un module central de transposition de bandes 28.

Le module central de conformation 27 est propre à conformer un signal numérique en un signal radiofréquence présentant une forme d'onde avec un étalement du spectre supérieur à 1 MHz.

Le module central de conformation 27 est, par exemple, un modem apte à effectuer des transmissions par étalement de spectre sur une largeur supérieure à 1 MHz.

L'étalement est, par exemple, obtenue par une technique d'étalement de spectre à séquence directe (ou DSSS de l'anglais « Direct Sequence Spread Spectrum » signifiant littéralement « Etalement du spectre par une séquence directe »). Lors de l'étalement, le signal numérique est combiné avec un signal pseudo-aléatoire, formant un signal étalé. Le signal étalé occupe une bande de fréquence plus large, déterminée par la fréquence du signal pseudo-aléatoire.

Le module central de transposition 28 est propre à convertir un signal dans une première bande de fréquences en une deuxième bande de fréquences, la deuxième bande de fréquences étant distincte de la première bande de fréquences.

La première bande de fréquences appartient, dans l'exemple décrit, au domaine radiofréquence.

La deuxième bande de fréquences est une bande de fréquences permettant une transmission par satellite.

Par exemple, la deuxième bande de fréquences est la bande X. La bande X est une bande de fréquences comprises entre 8 gigahertz (GHz) et 12 GHz.

Selon l'exemple décrit, la deuxième bande de fréquences est la bande Ku. La bande Ku est une bande de fréquences comprises entre 12 GHz et 18 GHz.

Le module central de transposition 28 permet ainsi d'obtenir le message de reconfiguration à transmettre.

L'antenne centrale 26 est, de préférence, une antenne directive.

Par l'expression « antenne directive », il est entendu une antenne configurée pour émettre un signal présentant une puissance élevée selon une direction particulière. Selon d'autres directions, la puissance du signal est moins élevée par rapport à la puissance élevée.

L'antenne centrale 26 est, par exemple, une antenne parabolique. L'antenne parabolique comprend un miroir parabolique et une unité émettrice/réceptrice disposée dans un point focal du miroir parabolique.

L'antenne centrale 26 est propre à émettre le message de reconfiguration en bande Ku à un satellite 16.

Les nœuds 18 sont mobiles. Par définition, un nœud 18 mobile présente une position géographique susceptible de varier au cours du temps et une orientation par rapport au satellite qui évolue également.

Un nœud 18 est maintenant décrit en référence à la figure 2, chaque nœud 18 comportant les mêmes éléments.

Le nœud 18 comporte des éléments de communication pour assurer des communications radio avec les autres nœuds 18 ou la station centrale 14.

Le nœud 18 comprend une chaîne de réception locale 30, un contrôleur local 32 et un dispositif d'émission/réception 33.

La chaîne de réception locale 30 comprend une antenne satellitaire locale 34 et un convertisseur local 36.

L'antenne satellitaire locale 34 est, par exemple, une antenne hémisphérique.

Par « antenne hémisphérique », il est entendu une antenne qui est propre à recevoir ou émettre des signaux dans une moitié de l'espace. Dans l'exemple, l'antenne satellitaire locale 34 est propre à recevoir ou émettre des signaux dans l'hémisphère orienté vers le haut, par rapport à un plan horizontal.

L'antenne satellitaire locale 34 forme, par exemple, un disque présentant un bord circulaire dans un plan.

L'antenne satellitaire 34 est, par exemple, une antenne non pointée sur le satellite 16. L'antenne satellitaire 34 est apte à recevoir une transmission par étalement de spectre en provenance d'une multitude de directions.

L'antenne satellitaire locale 34 propre à recevoir le message de reconfiguration en bande Ku provenant du satellite 16.

Par exemple, l'antenne centrale 26 est de type différent de l'antenne satellitaire locale 34. Dans un exemple, l'antenne centrale 26 est une antenne parabolique et l'antenne satellitaire locale 34 est une antenne hémisphérique.

Le convertisseur local 36 comporte un module local de transposition de bandes 38 et un module local de conformation 40.

Comme pour le module central de transposition de bandes, le module local de transposition de bandes 38 est propre à convertir un signal dans une première bande de fréquences en une deuxième bande de fréquences, la deuxième bande de fréquences étant distincte de la première bande de fréquences.

Dans l'exemple illustré, le module local de transposition de bandes 38 est propre à convertir le message de reconfiguration reçu en un signal radiofréquence.

Le module local de conformation 40 est propre à convertir le signal radiofréquence en un signal numérique exploitable par le contrôleur local 32.

Le contrôleur local 32 est propre à déterminer une commande de reconfiguration contenu dans le message de reconfiguration.

Le contrôleur local 32 est un ordinateur.

Plus généralement, le contrôleur local 32 est un calculateur électronique propre à manipuler et/ou transformer des données représentées comme des quantités électroniques ou physiques dans des registres du contrôleur local 32 et/ou des mémoires en d'autres données similaires correspondant à des données physiques dans des mémoires ou des registres.

Le dispositif d'émission/réception 33 est un dispositif d'émission/réception terrestre.

Par l'expression « dispositif d'émission/réception terrestre », il est entendu un dispositif propre à émettre ou recevoir des signaux de communication appartenant au domaine radiofréquence.

Les signaux de communication sont, par exemple, des liaisons UHF du réseau UHF.

Les signaux de communication sont des signaux transférés directement entre deux dispositifs d'émission/réception 33, sans passer par un satellite.

Les nœuds 18 sont, dans l'exemple de la figure 1, répartis en trois sous-groupes 50, 52 et 54. Chaque sous-groupe 50, 52 et 54 correspond, par exemple, à une mission respective et particulière.

Chaque nœud 18 d'un sous-groupe 50, 52 et 54 est propre à émettre les signaux de communication vers les autres nœuds 18 du même sous-groupe 50, 52 et 54, et à recevoir les signaux de communication provenant des nœuds 18 du même sous-groupe 50, 52 et 54.

Les nœuds 18 des sous-groupes 50, 52, 54 sont, en outre, configurés pour recevoir les signaux satellitaires émis par le satellite 16 (symbolisé par le flash 56 sur la figure 1).

Les nœuds 18B du sous-groupe 50 sont, en outre, configurés pour émettre des signaux satellitaires vers le satellite 16 (symbolisé par les flashs 58 sur la figure 1).

Il est à noter que, dans l'exemple de la figure 1, chaque nœud de réception 18A est dépourvu d'une antenne configurée pour émettre des signaux à destination du satellite 16.

En particulier, seul chaque nœud du sous-groupe 50 est configuré pour émettre des signaux à destination du satellite 16. Ces nœuds du sous-groupe 50 sont les nœuds satellitaires 18B. Cela implique que chaque nœud satellitaire 18B est pourvu d'une antenne configurée pour émettre des signaux à destination du satellite 16.

A contrario, les nœuds des sous-groupes 52 et 54, dits nœuds de réception 18A, n'ont pas cette capacité d'émission vers le satellite 16. En effet, les nœuds de réception 18A ne comprennent pas d'antennes configurées pour émettre des signaux à destination du satellite 16.

Il convient de noter que le contrôleur central 20 est propre à déterminer la configuration, c'est-à-dire la configuration déterminée. La configuration déterminée est une configuration du réseau de communication 12, c'est-à-dire une configuration de l'ensemble des éléments du réseau 12.

Comme décrit ci-dessus, la configuration déterminée est une configuration du réseau de communication 12. La configuration déterminée s'applique notamment à l'ensemble des nœuds 18 du réseau de communication 12.

En particulier, la configuration déterminée est indépendante d'un statut ainsi que de la présence ou non d'un nœud appartenant à l'ensemble des nœuds 18.

En particulier, cela implique que la configuration déterminée est une donnée distincte d'un statut d'un nœud particulier du réseau de communication 12.

Similairement, la configuration déterminée est distincte d'un nombre de nœuds 18 présents dans le réseau de communication 12.

Le fonctionnement du réseau 12 est maintenant décrit en référence à un exemple de mise en œuvre de procédé de gestion du réseau 12 lors d'une manœuvre de reconfiguration du réseau 12.

Le procédé comporte une étape de réception de besoin, une étape de détermination, une étape de génération, une étape d'émission, une étape de réception et une étape de passage.

Lors de l'étape de réception de besoin de reconfiguration, le contrôleur central 20 obtient au moins un besoin de reconfiguration du réseau 12 (symbolisé par un flash 60 sur la figure 2).

Pour cela, à titre d'exemple, le contrôleur central 20 collecte les besoins que chaque nœud satellitaire 18B émet.

Par exemple, au moins un nœud satellitaire 18B émet des besoins de reconfiguration vers le satellite 16, qui transmet les besoins de configuration au contrôleur central 20.

Le contrôleur central 20 détermine ensuite, lors de l'étape de détermination, une configuration du réseau 12 en fonction d'une synthèse des besoins de reconfiguration exprimés pendant un intervalle de temps donné.

La synthèse des besoins de reconfiguration comprend, par exemple, des paramètres obligatoires de reconfiguration, et des paramètres facultatifs de reconfiguration.

Plus précisément, le contrôleur central 20 cherche une configuration du réseau 12 permettant de répondre à chaque besoin de reconfiguration.

En pratique, du fait que les besoins de reconfiguration sont parfois contradictoires et, ainsi, impossibles à combler, le contrôleur central 20 cherche une configuration du réseau 12 répondant à un nombre important de besoins de reconfiguration ou du moins, aux besoins les plus prioritaires.

Pour effectuer une telle recherche, le contrôleur central 20 utilise, par exemple, une table associant à un unique besoin des configurations du réseau 12 répondant au besoin.

La configuration déterminée correspond à une configuration déduite des configurations données par la table.

Le contrôleur central 20 détermine, en outre, l'heure d'application de la configuration.

A l'issue de l'étape de détermination, une nouvelle configuration du réseau 12 ainsi que l'heure à laquelle il convient de l'appliquer sont obtenues.

Lors de l'étape de génération, il est généré un message de reconfiguration permettant de faire passer à chaque nœud 18 du réseau 12 la configuration déterminée lors de l'étape de détermination.

Plus précisément, le contrôleur central 20 génère un signal numérique de demande de la reconfiguration.

En l'espèce, le signal numérique comporte la nouvelle configuration du réseau 12 et l'heure d'application de la nouvelle configuration.

Le convertisseur central 24 convertit le signal numérique en un message de reconfiguration dans la bande Ku.

La conversion se fait d'abord via la technique DSSS mise en œuvre par le module central de conformation 27 puis par transposition dans la bande Ku par le module central de transposition de bandes 28.

A l'issue de l'étape de génération, il est ainsi obtenu le message de reconfiguration à émettre.

Lors de l'étape d'émission, le message de reconfiguration est émis depuis la station centrale 14 vers chaque nœud 18 via le satellite 16.

C'est l'antenne centrale 26 qui émet le message de reconfiguration.

Lors de l'étape de réception, le message de reconfiguration est reçu par chaque antenne satellitaire locale 34.

Puis, le message de reconfiguration est converti par le convertisseur local 36 pour obtenir un signal numérique exploitable par le contrôleur local 32.

Lors de l'étape de passage, le contrôleur local 32 commande alors le nœud 18 pour que le nœud 18 se conforme à la nouvelle configuration du réseau 12, notamment par application de consignes de configuration contenues dans le message de configuration au dispositif d'émission/réception 33.

Le contrôleur local 32 transmet un signal de commande via la liaison de données 62 au dispositif d'émission/réception 33.

De préférence, l'étape de passage n'est mise en œuvre que si l'heure d'application est inférieure ou égale à l'heure locale. Dans cet exemple, le contrôleur local 32 transmet le signal de commande au dispositif d'émission/réception si l'heure d'application est inférieure ou égale à l'heure locale.

Le procédé de gestion permet une reconfiguration aisée du réseau 12.

De fait, le procédé de gestion permet une reconfiguration de l'ensemble des nœuds 18 du réseau 12 même lorsque le réseau 12 est scindé du fait que certains nœuds 18 sont hors de portée radio. En effet, via la liaison satellitaire, les nœuds 18 hors de portée radio recevront le message de reconfiguration et pourront l'appliquer. Ainsi, lorsque les nœuds 18 sont à nouveau dans la portée radio, les nœuds 18 sont synchronisés avec les autres du fait que leur configuration radio est la même.

Le procédé de gestion permet ainsi une reconfiguration du réseau 12 en temps quasi-réel.

Il est également à noter que la mise en place d'un tel procédé de gestion sur un réseau 12 existant est relativement aisé puisqu'il suffit d'ajouter un élément de communication satellitaire relativement large bande, ce qui présente une taille réduite et est peu onéreux à installer sur un nœud 18.

De plus, le procédé de gestion est compatible avec n'importe quel type de station centrale 14 et de nœuds 18. Par exemple, le procédé de gestion est applicable sur un réseau de stations fixes, de véhicules fixes ou mobiles, un réseau de bateaux, un réseau d'aéronefs ou un réseau intégrant l'ensemble de ces moyens.

Le procédé de gestion est, en outre, robuste puisque le signal émis est à bande étroite (typiquement moins de 1kb/s) mais est émis sur une bande relativement large (typiquement plus que 1 MHz) de telle sorte que le facteur d'étalement est important (typiquement 30 dB). Ce facteur d'étalement permet de compenser le faible gain des antennes hémisphériques par rapport au gain d'antennes paraboliques.

En outre, ce facteur permet de procéder à la réjection des interférences provenant d'autres satellites.

Le procédé permet de garantir une bonne réception du signal reçu par le plus de nœuds 18 possibles.

Pour augmenter cet effet, l'étape d'émission peut être mise en oeuvre plusieurs en fois.

Par exemple, l'étape d'émission est mise en oeuvre de manière périodique, par exemple toutes les dix minutes.

En outre, en cas de défaillance d'un nœud 18, le procédé de gestion comprend des étapes additionnelles.

Le procédé comporte ainsi des étapes additionnelles d'avertissement et de retransmission.

Lors de l'étape d'avertissement, un premier nœud 18 ne recevant les signaux de reconfiguration avertit au moins un autre nœud 18 (typiquement le nœud le plus proche), dit deuxième nœud 18, du fait que le premier nœud 18 ne reçoit pas les signaux de reconfiguration provenant de la station centrale 14.

Puis, lors de l'étape de retransmission, le deuxième nœud 18 qui a reçu l'avertissement retransmet au premier nœud 18 le message de reconfiguration.

Cette robustesse permet de mettre en œuvre le procédé de gestion autant de fois que désiré.

Le procédé de gestion permet, en outre, d'envisager d'autres applications. Par exemple, le procédé de gestion peut interdire l'émission de signaux de communication radio entre les nœuds 18 par la voie satellitaire.

## Revendications

1. Procédé de gestion d'un réseau de communication (12), le réseau de communication (12) comprenant un ensemble de nœuds (18) mobiles et au moins une station centrale (14), la station centrale (14) comportant un contrôleur (20) et une chaîne d'émission/réception (22), chaque nœud (18) comportant une antenne satellitaire (34) propre à recevoir des signaux radiofréquences, le réseau de communication (12) étant **caractérisé par** au moins une configuration déterminant le fonctionnement du réseau de communication (12), l'ensemble des nœuds (18) comportant des nœuds de réception (18A) et des nœuds satellitaires (18B), les nœuds satellitaires (18B) étant configurés pour émettre des signaux satellitaires vers un satellite (16), les nœuds de réception (18A) étant dépourvus d'une antenne configurée pour émettre des signaux à destination du satellite (16), le procédé de gestion comprenant les étapes suivantes :
- réception par le contrôleur (20) depuis des nœuds satellitaires (18B) d'au moins un besoin de reconfiguration du réseau de communication (12),
- détermination d'une configuration du réseau de communication (12) par le contrôleur (20) en fonction d'une synthèse des besoins de reconfiguration exprimés pendant un intervalle de temps donné,
- génération d'un message de reconfiguration du réseau de communication (12) permettant de faire passer à chaque nœud (18) la configuration déterminée à l'étape de détermination,
- émission par la chaîne d'émission/réception (22) du message de reconfiguration vers chaque nœud (18) via le satellite (16),
- réception par l'antenne satellitaire (34) du message de reconfiguration, et
- pour chaque nœud (18), passage à la configuration déterminée en commandant le nœud (18) pour que le nœud (18) se conforme à la configuration déterminée du réseau (12) par application de consignes de configuration contenues dans le message de configuration à un dispositif d'émission/réception (33) dudit nœud.

2. Procédé selon la revendication 1, dans lequel le message de reconfiguration est transmis à un modem apte à effectuer des transmissions par étalement de spectre sur une largeur supérieure à 1 MHz, notamment obtenue par une technique d'étalement de spectre à séquence directe.

3. Procédé selon la revendication 1 ou 2, dans lequel l'antenne satellitaire (34) est une antenne non pointée sur le satellite (16) et apte à recevoir une transmission par étalement de spectre en provenance d'une multitude de directions.

4. Procédé selon l'une quelconque des revendications 1 à 3, dans lequel la station centrale (14) est fixe.

5. Procédé selon l'une quelconque des revendications 1 à 4, dans lequel le message de reconfiguration comporte une donnée relative à une heure d'application de la configuration déterminée.

6. Procédé selon la revendication 5, dans lequel l'étape de passage n'est mise en oeuvre que si l'heure d'application est inférieure ou égale à l'heure locale.

7. Procédé selon l'une quelconque des revendications 1 à 6, dans lequel, lorsqu'un nœud (18) ne reçoit pas les signaux provenant de la chaîne d'émission/réception (22), le procédé comporte une étape d'avertissement d'au moins un autre nœud (18) du fait que ledit nœud (18) ne reçoit pas les signaux provenant de la chaîne d'émission/réception (22) et une étape de retransmission du message de reconfiguration depuis le nœud (18) averti vers ledit nœud (18) ne recevant pas les signaux provenant de la chaîne d'émission/réception (22).

8. Procédé selon l'une quelconque des revendications 1 à 7, dans lequel la configuration comporte au moins l'une des commandes suivantes:
- une modification de la répartition en sous-groupe de l'ensemble des nœuds (18), et
- une modification d'au moins un canal de communication alloué pour une communication entre les nœuds (18) du réseau de communication (12).

9. Procédé selon l'une quelconque des revendications 1 à 8, dans lequel au moins un besoin est fonction de la quantité de données à transmettre entre au moins deux nœuds (18), la distance entre deux nœuds (18) ou le nombre de nœuds (18) communiquant entre eux.

10. Réseau de communication (12) comprenant un ensemble de nœuds (18) mobiles et au moins une station centrale (14), la station centrale (14) comportant un contrôleur (20) et une chaîne d'émission/réception (22), chaque nœud (18) comportant une antenne satellitaire (34) propre à recevoir des signaux radiofréquences, l'ensemble des nœuds (18) comportant des nœuds de réception (18A) et des nœuds satellitaires (18B), les nœuds satellitaires (18B) étant configurés pour émettre des signaux satellitaires vers un satellite (16), les nœuds de réception (18A) étant dépourvus d'une antenne configurée pour émettre des signaux à destination du satellite (16), chaque nœud satellitaire (18B) comportant une antenne satellitaire (34) propre à émettre et recevoir des signaux radio fréquences, le réseau de communication (12) étant **caractérisé par** une configuration déterminant le fonctionnement du réseau de communication (12), le contrôleur (20) étant propre à obtenir au moins un besoin de reconfiguration du réseau de communication (12) des nœuds satellitaires (18B), à déterminer une configuration du réseau de communication (12) en fonction d'une synthèse des besoins de reconfiguration exprimés pendant un intervalle de temps donné, et à générer un message de reconfiguration du réseau de communication (12) permettant de faire passer à chaque nœud (18) la configuration déterminée, la chaîne d'émission/réception (22) étant propre à émettre le message de reconfiguration vers chaque nœud (18) via le satellite (16), chaque antenne satellitaire (34) propre à recevoir le message de reconfiguration, chaque nœud (18) étant propre à passer à la configuration déterminée en commandant le nœud (18) pour que le nœud (18) se conforme à la configuration déterminée du réseau (12) par application de consignes de configuration contenues dans le message de configuration à un dispositif d'émission/réception (33) dudit nœud.

## Patentansprüche

1. Verwaltungsverfahren eines Kommunikationsnetzes (12), das Kommunikationsnetz (12) umfassend eine Gruppe von mobilen Knoten (18) und mindestens eine Zentralstation (14), die Zentralstation (14) umfassend eine Steuerung (20) und eine Sende-/Empfangskette (22), jeder Knoten (18) umfassend eine Satellitenantenne (34), die geeignet ist, um Hochfrequenzsignale zu empfangen, wobei das Kommunikationsnetz (12) durch mindestens eine Konfiguration gekennzeichnet ist, die den Betrieb des Kommunikationsnetzes (12) bestimmt, die Einheit von Knoten (18) umfassend Empfangsknoten (18A) und Satellitenknoten (18B), wobei die Satellitenknoten (18B) konfiguriert sind, um Satellitensignale an einen Satelliten (16) zu senden, wobei den Empfangsknoten (18A) eine Antenne fehlt, die konfiguriert ist, um Signale an den Satelliten (16) zu senden, das Verwaltungsverfahren umfassend die folgenden Schritte:
- Empfangen, durch die Steuerung (20) von den Satellitenknoten (18B), mindestens einer Anforderung zur Neukonfiguration des Kommunikationsnetzes (12),
- Bestimmen einer Konfiguration des Kommunikationsnetzes (12) durch die Steuerung (20) basierend auf einer Zusammenfassung der Neukonfigurationsanforderungen, die während eines gegebenen Zeitintervalls ausgedrückt werden,
- Erzeugen einer Neukonfigurationsnachricht des Kommunikationsnetzes (12), um zu ermöglichen, dass die in dem Bestimmungsschritt bestimmte Konfiguration an jeden Knoten (18) weitergeleitet wird,
- Übertragen, durch die Sende-/Empfangskette (22), der Neukonfigurationsnachricht an jeden Knoten (18) über den Satelliten (16),
- Empfangen, durch die Satellitenantenne (34), der Neukonfigurationsnachricht, und
- für jeden Knoten (18), Umstellen auf die bestimmte Konfiguration durch Steuern des Knotens (18), damit der Knoten der bestimmten Konfiguration des Netzes (12) entspricht, durch Anwenden von Konfigurationsanweisungen, die in der Konfigurationsnachricht enthalten sind, auf eine Sende-/Empfangsvorrichtung (33) des Knotens.

2. Verfahren nach Anspruch 1, wobei die Neukonfigurationsnachricht an ein Modem übertragen wird, das geeignet ist, um Spreizspektrumübertragungen über eine Breite von mehr als 1 MHz durchzuführen, insbesondere erlangt durch eine Direktsequenz-Spreizspektrum-Technik.

3. Verfahren nach Anspruch 1 oder 2, wobei die Satellitenantenne (34) eine nicht auf den Satelliten (16) gerichtete Antenne ist, die in der Lage ist, eine Spreizspektrumübertragung aus einer Vielzahl von Richtungen zu empfangen.

4. Verfahren nach einem der Ansprüche 1 bis 3, wobei die Zentralstation (14) feststehend ist.

5. Verfahren nach einem der Ansprüche 1 bis 4, wobei die Neukonfigurationsnachricht Daten in Bezug auf eine Anwendungsuhrzeit der bestimmten Konfiguration umfasst.

6. Verfahren nach Anspruch 5, wobei der Schritt eines Umstellens nur dann durchgeführt wird, wenn die Anwendungsuhrzeit kleiner als oder gleich wie die Ortszeit ist.

7. Verfahren nach einem der Ansprüche 1 bis 6, wobei, wenn ein Knoten (18) keine Signale von der Sende-/Empfangskette (22) empfängt, das Verfahren einen Schritt eines Benachrichtigens mindestens eines anderen Knotens (18), dass der Knoten (18) die Signale von der Sende/Empfangskette (22) nicht empfängt, und einen Schritt eines erneuten Übertragens der Neukonfigurationsnachricht von dem benachrichtigten Knoten (18) an den Knoten (18), der die Signale von der Sende/Empfangskette (22) nicht empfängt, umfasst.

8. Verfahren nach einem der Ansprüche 1 bis 7, wobei die Konfiguration mindestens einen der folgenden Befehle umfasst:
- eine Änderung der Untergruppierung der Einheit von Knoten (18), und
- eine Änderung mindestens eines Kommunikationskanals, der für die Kommunikation zwischen den Knoten (18) des Kommunikationsnetzes (12) zugewiesen ist.

9. Verfahren nach einem der Ansprüche 1 bis 8, wobei mindestens eine Anforderung abhängig von der Datenmenge ist, die zwischen mindestens zwei Knoten (18) übertragen werden soll, der Entfernung zwischen zwei Knoten (18) oder der Anzahl der miteinander kommunizierenden Knoten (18) ist.

10. Kommunikationsnetz (12), umfassend eine Einheit mobiler Knoten (18) und mindestens eine Zentralstation (14), die Zentralstation (14) umfassend eine Steuerung (20) und eine Sende-/Empfangskette (22), jeder Knoten (18) umfassend eine Satellitenantenne (34), die geeignet ist, um Hochfrequenzsignale zu empfangen, die Einheit von Knoten (18) umfassend Empfangsknoten (18A) und Satellitenknoten (18B), wobei die Satellitenknoten (18B) konfiguriert sind, um Satellitensignale an einen Satelliten (16) zu senden, wobei den Empfangsknoten (18A) eine Antenne fehlt, die konfiguriert ist, um Signale an den Satelliten (16) zu senden, jeder Satellitenknoten (18B) umfassend eine Satellitenantenne (34), die geeignet ist, um Hochfrequenzsignale zu Senden und zu empfangen, wobei das Kommunikationsnetz (12) durch eine Konfiguration gekennzeichnet ist, die den Betrieb des Kommunikationsnetzes (12) bestimmt, wobei die Steuerung (20) geeignet ist, um mindestens eine Neukonfigurationsanforderung des Kommunikationsnetzes (12) von den Satellitenknoten (18B) zu erlangen, eine Konfiguration des Kommunikationsnetzes (12) abhängig von einer Synthese der während eines gegebenen Zeitintervalls ausgedrückten Neukonfigurationsanforderung zu bestimmen und eine Neukonfigurationsnachricht des Kommunikationsnetzes (12) zu erzeugen, die es ermöglicht, die bestimmte Konfiguration an jeden Knoten (18) weiterzuleiten, wobei die Sende-/Empfangskette (22) geeignet ist, um die Neukonfigurationsnachricht über den Satelliten (16) an jeden Knoten (18) zu senden, wobei jede Satellitenantenne (34) geeignet ist, um die Neukonfigurationsnachricht zu empfangen, wobei jeder Knoten (18) geeignet ist, um auf die bestimmte Konfiguration durch Steuern des Knotens (18) umzustellen, damit der Knoten der bestimmten Konfiguration des Netzes (12) entspricht, durch Anwenden von Konfigurationsanweisungen, die in der Konfigurationsnachricht enthalten sind, auf eine Sende-/Empfangsvorrichtung (33) des Knotens.

## Claims

1. A method for managing a communication network (12), the communication network (12) comprising a set of mobile nodes (18) and at least one central station (14), the central station (14) including a controller (20) and a transceiver chain (22), each node (18) including a satellite antenna (34) adapted to of receive radio signals, the communication network (12) being **characterized by** at least one configuration determining the operation of the communication network (12), the set of nodes (18) including reception nodes (18A) and satellite nodes (18B), the satellite nodes (18B) being configured to transmit satellite signals to a satellite (16), the receiving nodes (18A) lacking an antenna configured to transmit signals to the satellite (16), the method for managing comprising the following steps:
- reception by the controller (20) from the satellite nodes (18B) of at least one reconfiguration need of the communication network (12),
- determination of a configuration of the communication network (12) by the controller (20) based on a synthesis of the reconfiguration needs expressed during a given time interval,
- generation of a reconfiguration message of the communication network (12) making it possible to transmit the configuration determined in the determining step to each node (18),
- emission by the transceiver chain (22) of the reconfiguration message to each node (18) via the satellite (16),
- reception by the satellite antenna (34) of the reconfiguration message, and
- for each node (18), moving to the determined configuration by controlling the node (18) so that the node (18) conforms to the determined configuration of the network (12) by applying configuration setpoints contained in the configuration message to a transceiver device (33) of said node.

2. The method according to claim 1, wherein the reconfiguration message is sent to a modem adapted to perform transmissions by spread spectrum over a width greater than 1 MHz, in particular obtained by a direct sequence spread spectrum technique.

3. The method according to claim 1 or 2, wherein the satellite antenna (34) is an antenna not pointed on the satellite (16) and adapted to receive a transmission by spread spectrum coming from a multitude of directions.

4. The method according to any one of claims 1 to 3, wherein the central station (14) is fixed.

5. The method according to any one of claims 1 to 4, wherein the reconfiguration message includes a datum relative to an application time of the determined configuration.

6. The method according to claim 5, wherein the moving step is only carried out if the application time is less than or equal to the local time.

7. The method according to any one of claims 1 to 6, wherein, when a node (18) does not receive the signals coming from the transceiver chain (22), the method includes a step for warning at least one other node (18) of the fact that said node (18) does not receive the signals coming from the transceiver chain (22) and a step for resending the reconfiguration message from the warned node (18) to said node (18) not receiving the signals coming from the transceiver chain (22).

8. The method according to any one of claims 1 to 7, wherein the configuration includes at least one of the following commands:
- a change in the distribution into subgroups of the set of nodes (18), and
- a change of at least one communication channel allocated for a communication between the nodes (18) of the communication network (12).

9. The method according to any one of claims 1 to 8, wherein at least one need depends on the quantity of data to be transmitted between at least two nodes (18), the distance between two nodes (18) or the number of nodes (18) communicating with one another.

10. A communication network (12) comprising a set of mobile nodes (18) and at least one central station (14), the central station (14) including a controller (20) and a transceiver chain (22), each node (18) including a satellite antenna (34) adapted to receive radio signals, the set of nodes (18) including reception nodes (18A) and satellite nodes (18B), the satellite nodes (18B) being configured to transmit satellite signals to a satellite (16), the receiving nodes (18A) lacking an antenna configured to transmit signals to the satellite (16), each satellite node (18B) including a satellite antenna (34) able to send and receive radio signals, the communication network (12) being **characterized by** a configuration determining the operation of the communication network (12), the controller (20) being able to obtain at least one reconfiguration need of the communication network (12) of the satellite nodes (18B), determine a configuration of the communication network (12) based on a synthesis of the reconfiguration needs expressed during a given time interval, and generate a reconfiguration message of the communication network (12) making it possible to pass the determined configuration to each node (18), the transceiver chain (22) being able to emit the reconfiguration message to each node (18) via the satellite (16), each satellite antenna (34) able to receive the reconfiguration message, each node (18) being able to switch to the determined configuration by controlling the node (18) so that the node (18) conforms to the determined configuration of the network (12) by applying configuration setpoints contained in the configuration message to a transceiver device (33) of said node.
